# EUROPÄISCHE PATENTSCHRIFT

(11) **EP 2 960 121 B1**
(45) Veröffentlichungstag und Bekanntmachung des Hinweises auf die Patenterteilung: **28.12.2016**
(21) Anmeldenummer: 14173447.5
(22) Anmeldetag: 23.06.2014
(51) Int. Cl.: B60T 7/10, F16H 59/10, F16H 63/34, G05G 1/04

(54) **PARKSPERRBETÄTIGUNGSEINRICHTUNG, PARKSPERRE MIT EINER SOLCHEN PARKSPERRBETÄTIGUNGSEINRICHTUNG SOWIE KRAFTFAHRZEUG MIT EINER SOLCHEN PARKSPERRE**
PARKING LOCK ACTUATING DEVICE, PARKING LOCK WITH SUCH AN ACTUATING DEVICE, AND MOTOR VEHICLE HAVING SUCH A PARKING LOCK
DISPOSITIF D'ACTIONNEMENT DE FREIN DE BLOCAGE, FREIN DE BLOCAGE DOTÉ D'UN TEL DISPOSITIF ET VÉHICULE AUTOMOBILE ÉQUIPÉ D'UN TEL FREIN DE BLOCAGE

(43) Veröffentlichungstag der Anmeldung: 30.12.2015
(73) Patentinhaber: Dura Automotive Systems GmbH, 54550 Daun (DE)
(72) Erfinder: Horten, Thomas, 54552 Boxberg (DE)
(74) Vertreter: Albrecht, Ralf

(56) Entgegenhaltungen:
- EP-A1- 2 184 198
- WO-A1-01/59336
- DE-A1-102010 030 808

## Beschreibung

Die Erfindung betrifft eine Parksperrbetätigungseinrichtung ausschließlich für die Betätigung eines Parksperrmechanismusses eines Kraftfahrzeuges, mit einem von Hand bedienbaren Betätigungshebel, der in einer Kulisse zwischen einer Fahrstellung und einer Parkstellung beweglich geführt ist. Sie bezieht sich ferner auf eine Parksperre mit einer Parksperrbetätigungseinrichtung, die einen von Hand bedienbaren Betätigungshebel aufweist, der über eine Kopplung mit einem Parksperrmechanismus verbunden ist.

Eine solche Parksperre ist aus EP 2184198 A bekannt.

Schließlich bezieht sich die Erfindung auf ein Kraftfahrzeug mit einer Parksperre zum Blockieren der Bewegung des Kraftfahrzeuges beim Parken. Kraftfahrzeuge, insbesondere solche für landwirtschaftliche Zwecke wie Traktoren oder dergleichen, sind regelmäßig mit einer Parksperre versehen, die im Wesentlichen aus einer im Bereich des Fahrersitzes angeordneten Parksperrbetätigungseinrichtung und einem damit meist mechanisch gekoppelten Parksperrmechanismus besteht, der im Bereich des Getriebes des Kraftfahrzeuges zwecks Sperrung der Antriebswelle angeordnet ist und z.B. eine Sperrklinke aufweist, die mittels der Parksperrbetätigungseinrichtung aus einer Freigabestellung in eine Sperrstellung bewegbar ist und umgekehrt. Bis auf den Parksperrmechanismus gibt es keine Verbindung zu dem Getriebe und damit auch nicht zu der Getriebeschaltung und dessen Schalthebel.

Im Unterschied zu einer Parkbremse darf der Parksperrmechanismus wegen seines in der Sperrstellung formschlüssigen Eingriffs nur bei Stillstand des Kraftfahrzeuges in die Sperrstellung gebracht werden. Da ist zwar den Fahrern solcher Kraftfahrzeuge bekannt. Gleichwohl geschieht es aus Nachlässigkeit - oder bei nichtkundigen Fahrern aus Unwissenheit - gelegentlich, dass der Betätigungshebel der Parksperrbetätigungseinrichtung aus dessen Fahrstellung in die Parkstellung bewegt wird, obwohl das Kraftfahrzeug noch nicht zum Stillstand gekommen ist. Dies kann im besten Fall zu einem ruckartigen Anhalten des Kraftfahrzeuges führen, aber eben auch zu einer Beschädigung oder Zerstörung des Parksperrmechanismusses am Getriebe, was erhebliche Reparaturkosten und langen Stillstand des Kraftfahrzeuges zur Folge hat.

Der Erfindung liegt die Aufgabe zugrunde, eine Parksperrbetätigungseinrichtung derart auszubilden, dass mit ihrer Hilfe die Gefahr einer Beschädigung des Parksperrmechanismusses reduziert oder ganz vermieden wird. Weitere Aufgabe der Erfindung ist es, eine Parksperre mit einer solchen Parksperrbetätigungseinrichtung und schließlich ein Kraftfahrzeug mit einer derartigen Parksperre bereitzustellen.

Der erste Teil der Aufgabe wird erfindungsgemäß dadurch gelöst, dass eine Sperrklinke vorgesehen ist, die zwischen einer Freigabestellung, in der sie die Beweglichkeit des Betätigungshebels nicht behindert, und einer Sperrstellung bewegbar ist, in der sie in den Bewegungsbereich des Betätigungshebels zwischen dessen Fahr- und Parkstellung sperrend hineinragt, und dass ein mit elektrischem Strom beaufschlagbarer Aktuator mit einem beweglichen Blockierelement vorgesehen ist, der in einen Blockiermodus bringbar ist, in dem das Blockierelement die Sperrklinke blockiert, wenn sich die Sperrklinke in ihrer Sperrstellung befindet, und der in einen Nichtblockiermodus bringbar ist, in der die Sperrklinke vom Aktuator freigegeben ist. Grundgedanke der Erfindung ist es also, eine Parksperrbetätigungseinrichtung mit einer Sperrklinke zu versehen, die zwischen einer Freigabestellung und einer Sperrstellung bewegbar ist, wobei die Sperrklinke in der Sperrstellung mit Hilfe eines Aktuators blockiert wird, insbesondere wenn sich der Betätigungshebel in der Fahrstellung befindet. In diesem Fall ist es dem Fahrer eines mit dieser Parksperrbetätigungseinrichtung ausgerüsteten Kraftfahrzeuges nicht mehr möglich, den Betätigungshebel aus der Fahrstellung in die Parkstellung zu bewegen. Dabei sollte die Sperrklinke in der Sperrstellung den Betätigungshebel in der Fahrstellung so sperren, dass er aus dieser Stellung nicht herausbewegt werden kann.

In Ausbildung der Erfindung ist vorgesehen, dass der Aktuator eine Rückstellfeder aufweist, die das Blockierelement in einer Bewegungsrichtung beaufschlagt und gegen deren Federwirkung das Blockierelement von einem Modus des Aktuators in dessen anderen Modus bewegt wird, wenn der Aktuator bestromt ist, insbesondere dass die Rückstellfeder das Blockierelement bei Unterbrechung der Bestromung des Aktuators aus dem Blockiermodus in den Nichtblockiermodus versetzt. Auf diese Weise kommt man mit einem einfach wirkenden Aktuator aus, der mangels Bestromung mittels der Rückstellfeder wieder in die Ausgangsstellung, vorzugsweise in den Nichtblockiermodus, bewegt wird.

Nach einem weiteren Merkmal der Erfindung ist vorgeschlagen, dass die Sperrklinke derart geformt ist, dass der Betätigungshebel von Hand aus der Fahrstellung in die Parkstellung unter Verdrängen der Sperrklinke in die Freigabestellung bewegbar ist, wenn sich der Aktuator im Nichtblockiermodus befindet. Auch insoweit bedarf es nicht eines zusätzlichen Aktuators. Nach Versetzen des Aktuators in den Nichtblockiermodus kann der Betätigungshebel aus der Fahrstellung unter Verdrängung der Sperrklinke in die Parkstellung versetzt werden.

In weiterer Ausgestaltung der Erfindung ist vorgesehen, dass die Sperrklinke mit einem Betätigungselement derart verbunden ist, dass das Betätigungselement in den Bereich der Fahrstellung des Betätigungshebels hineinragt, wenn sich die Sperrklinke in der Freigabestellung und der Betätigungshebel außerhalb der Fahrstellung befindet, und dass das Betätigungselement aus dem Bereich der Fahrstellung verdrängt wird und hierdurch die Sperrklinke aus der Freigabestellung in die Sperrstellung bewegt wird, wenn der Betätigungshebel in die Fahrstellung bewegt wird. Diese Ausbildung ist besonders vorteilhaft, weil die Sperrklinke bei Bewegung des Betätigungshebels mechanisch in die Freigabestellung bewegt wird, ohne dass es hierfür eines zusätzlichen Betätigungselements, beispielsweise in Form eines weiteren Aktuators, bedarf. Der vorhandene Aktuator dient lediglich der Blockierung der Sperrklinke in der Sperrstellung. Sperrklinke und Betätigungselement sollten im Wesentlichen als V-förmiges Formteil ausgebildet sein, bei dem der eine V-Schenkel die Sperrklinke und der andere V-Schenkel das Betätigungselement bilden. Der Aktuator kann dann mit dem Betätigungselement zusammenwirken, d.h. im Blockiermodus blockiert der Aktuator das Betätigungselement und darüber die Sperrklinke.

Nach der Erfindung ist desweiteren vorgesehen, dass ein Detektor zur Erfassung der Fahrstellung des Betätigungshebels vorhanden ist, über den die Bestromung des Aktuators derart gesteuert wird, dass er bei Erfassung der Fahrstellung des Betätigungshebels in den Blockiermodus versetzt wird. Dies kann zweckmäßigerweise durch Bestromung des Aktuators geschehen. Als Detektoren kommen insbesondere Sensoren, beispielsweise Magnetsensoren oder optische Sensoren, aber auch Schalter, z.B. Mikroschalter, in Frage. Nach der Erfindung ist ferner vorgesehen, dass der Aktuator mit einer Steuereinrichtung verbindbar oder verbunden ist, die einen Eingang für die Zuführung von Betriebsdaten aufweist, die bestimmte Betriebszustände des Kraftfahrzeuges repräsentieren, und die dazu geeignet ist, die Bestromung des Aktuators in Abhängigkeit von diesen Daten zu schalten. Mit Hilfe einer solchen Steuereinrichtung wird der Aktuator automatisch in Abhängigkeit von Betriebsdaten gesteuert. Betriebsdaten können beispielsweise die Geschwindigkeit des mit der Parksperrbetätigungseinrichtung versehenen Kraftfahrzeuges sein oder die Schalthebelstellung des Getriebes. Mit Hilfe der Steuereinrichtung kann dann betriebsdatenabhängig der Aktuator in den Blockiermodus versetzt werden, wenn sich der Betätigungshebel in der Fahrstellung befindet und das Kraftfahrzeug noch eine Geschwindigkeit aufweist, in der ein Versetzen des Betätigungshebels in die Parkstellung zu einer Gefährdung oder Zerstörung des Parksperrmechanismusses führen würde.

Anstatt oder in Kombination mit einer solchen Steuereinrichtung kann jedoch auch ein einfacher Schalter vorgesehen sein, der von dem Fahrer betätigt werden müsste, damit der Aktuator in den Nichtblockiermodus versetzt wird und damit ein Bewegen des Betätigungshebels in die Parkstellung ermöglicht wird. Dies nötigt den Fahrer vor der Handhabung des Betätigungshebels zunächst den Schalter zu betätigen, wodurch die Sicherheit gegen Fehlbedienung deutlich erhöht würde. Auf dem Rückweg von der Parkstellung in die Fahrstellung, beispielsweise unmittelbar vor dem Anfahren, könnte dann vorgesehen sein, dass der Schalter durch die Bewegung des Betätigungshebels mechanisch in seine Ausgangsstellung zurückgeführt wird, wenn der Betätigungshebel die Fahrstellung erreicht hat. Hierdurch würde der Aktuator aus dem Nichtblockiermodus erneut in den Blockiermodus überführt und folglich die Sperrklinke blockiert. Statt einer mechanischen Steuerung eines solchen Schalters kann selbstverständlich auch eine elektronische Steuerung vorgesehen sein. Es versteht sich, dass die automatische Steuerung des Aktuators mit Hilfe einer Betriebsdaten aufnehmenden Steuereinrichtung einen zuverlässigeren Schutz gegen Beschädigung oder Zerstörung des Parkmechanismusses darstellt.

Nach der Erfindung ist des Weiteren vorgeschlagen, dass die Sperrklinke in ihrer Freigabestellung und in ihrer Sperrstellung jeweils in Richtung auf diese Stellung federbeaufschlagt ist, so dass ein Herausbewegen der Sperrklinke aus jeder dieser Stellungen nur durch Überwindung eines Federwiderstandes möglich ist. Auf diese Weise wird die Sperrklinke bei Einnahme einer dieser beiden Stellungen zuverlässig in dieser Stellung gehalten, auch wenn auf die Sperrklinke Erschütterungen einwirken. Die Federbeaufschlagung kann insbesondere mittels einer Übertotpunktfederanordnung geschehen, d.h. einer Federanordnung, bei der die Feder zwischen den beiden Stellungen einen instabilen Kipppunkt durchläuft, in der die Feder am meisten gespannt ist.

Die Erfindung sieht des Weiteren vor, dass die Sperrklinke um eine Achse verschwenkbar ist, die sich senkrecht zur Ebene erstreckt, in der die Kulisse verläuft. Dabei kann die Sperrklinke an der Unterseite der Kulisse gelagert sein.

Die Kulisse sollte im Bereich der Fahrstellung eine Richtungsänderung in ihrer Ebene ausbilden. Im Zusammenwirken mit der Sperrklinke wird hierdurch eine besonders wirksame formschlüssige Blockierung des Betätigungshebels erreicht, wenn sich die Sperrklinke in Sperrstellung und der Betätigungshebel in Fahrstellung befinden.

Es ist nach der Erfindung ferner vorgeschlagen, dass eine elektrische und/oder akustische Signaleinrichtung insbesondere im Bereich der Kulisse vorgesehen ist, die den Wechsel des Aktuators von einem in den anderen Modus signalisiert. Auf diese Weise wird der Fahrer darauf aufmerksam gemacht, dass der Betätigungshebel freigegeben oder blockiert ist. Vorzuziehen ist allerdings eine Signaleinrichtung, die entweder einen Modus des Aktuators dauerhaft oder beide Moden des Aktuators dauerhaft, dann aber unterschiedlich signalisiert. So ist der Fahrer ständig darüber informiert, ob der sich in der Fahrstellung befindliche Betätigungshebel in die Parkstellung bewegen lässt, also nicht durch die Sperrklinke blockiert ist, oder ob er blockiert ist und demgemäß ein Versuch, ihn in die Parkstellung zu bewegen, zwecklos ist.

Der sich auf die Parksperre beziehende Teil der Aufgabe wird erfindungsgemäß dadurch gelöst, dass die Parksperre eine Parksperrbetätigungseinrichtung und einen damit mechanisch oder elektrisch gekoppelten Parksperrmechanismus aufweist, wobei die Parksperrbetätigungseinrichtung in der vorstehend beschriebenen, erfindungsgemäßen Weise ausgebildet ist. Insbesondere kann die Parksperre mit der oben erwähnten Steuereinrichtung versehen sein, die eine Schnittstelle für die Eingabe von Betriebsdaten des Kraftfahrzeuges aufweist, in dem die erfindungsgemäße Parksperre zum Einsatz kommt.

Die sich auf das Kraftfahrzeug beziehende Aufgabe wird erfindungsgemäß dadurch gelöst, dass es mit der vorgenannten Parksperre und hier insbesondere mit der erfindungsgemäßen Parksperrbetätigungseinrichtung versehen ist und dass mit dem Aktuator eine Steuereinrichtung verbunden ist, die einen Eingang für die Zuführung von Betriebsdaten aufweist, die bestimmte Betriebszustände des Kraftfahrzeuges repräsentieren, wobei die Steuereinrichtung dazu geeignet ist, die Bestromung des Aktuators in Abhängigkeit von diesen Signalen zu schalten, und dass das Kraftfahrzeug zumindest eine mit der Steuereinrichtung verbundene Erfassungseinrichtung zur Ermittlung der Betriebsdaten, insbesondere der Geschwindigkeit des Kraftfahrzeuges und/oder dessen Getriebestellung, aufweist, wobei Erfassungs- und Steuereinrichtung derart zusammenwirken, dass der Aktuator automatisch aus dem Blockiermodus in den Nichtblockiermodus versetzt wird, sobald die Geschwindigkeit des Kraftfahrzeuges einen bestimmten Grenzwert unterschreitet oder gleich Null ist und/oder wenn eine bestimmte Getriebeschaltstellung eingelegt ist, und dass der Aktuator aus dem Nichtblockiermodus in den Blockiermodus versetzt wird, sobald der Betätigungshebel in Fahrtstellung bewegt worden ist und die Geschwindigkeit des Kraftfahrzeuges einen bestimmten Grenzwert überschreitet oder größer als Null ist und/oder wenn in eine bestimmte Getriebeschaltstellung gewechselt wird. Bei einem Kraftfahrzeug mit einer solchen Parksperre ist gesichert, dass der Betätigungshebel der Parksperrbetätigungseinrichtung nur dann in die Parkstellung bewegt werden kann, wenn das Kraftfahrzeug sich in einem Zustand befindet, in dem die Betätigung des Parksperrmechanismusses nicht zu dessen Beschädigung oder gar Zerstörung führt. Dies lässt die Steuereinrichtung zusammen mit der zumindest einen Erfassungseinrichtung nur dann zu, wenn das Kraftfahrzeug nach einem Fahrvorgang in einen solchen Fahrzustand versetzt worden ist, in der der Parksperrmechanismus gefahrlos betätigt werden kann, sei es über eine elektrische Kopplung mit entsprechenden Aktuatoren am Parksperrmechanismus oder sei es mechanisch beispielsweise mit Hilfe eines Gestänges oder eines Drahtzuges.

In der Zeichnung ist die Erfindung anhand eines Ausführungsbeispiels näher veranschaulicht. Es zeigen:
- Figur 1: eine erfindungsgemäße Parksperrbetätigungseinrichtung in einer Seitenansicht mit Betätigungshebel in Fahrstellung;
- Figur 2: die Parksperrbetätigungseinrichtung gemäß Figur 1 in einer um die Hochachse um 90° gegen den Uhrzeigersinn verdrehten Seitenansicht;
- Figur 3: die Parksperrbetätigungseinrichtung nach den Figuren 1 und 2 in der Draufsicht mit Betätigungshebel in der Fahrstellung;
- Figur 4: die Parksperrbetätigungseinrichtung in der Draufsicht gemäß Figur 3, jedoch mit Betätigungshebel in Parkstellung;
- Figur 5: den unteren Teil der Sperrklinkeneinrichtung der Parksperrbetätigungseinrichtung gemäß den Figuren 1 bis 4 in perspektivischer Ansicht schräg von oben;
- Figur 6: die Sperrklinkeneinrichtung der Parksperrbetätigungseinrichtung gemäß den Figuren 1 bis 5 in der Unteransicht mit Sperrklinke in Sperrstellung;
- Figur 7: die Sperrklinkeneinrichtung in der Ansicht gemäß Figur 6 mit der Sperrklinke in Freigabestellung.

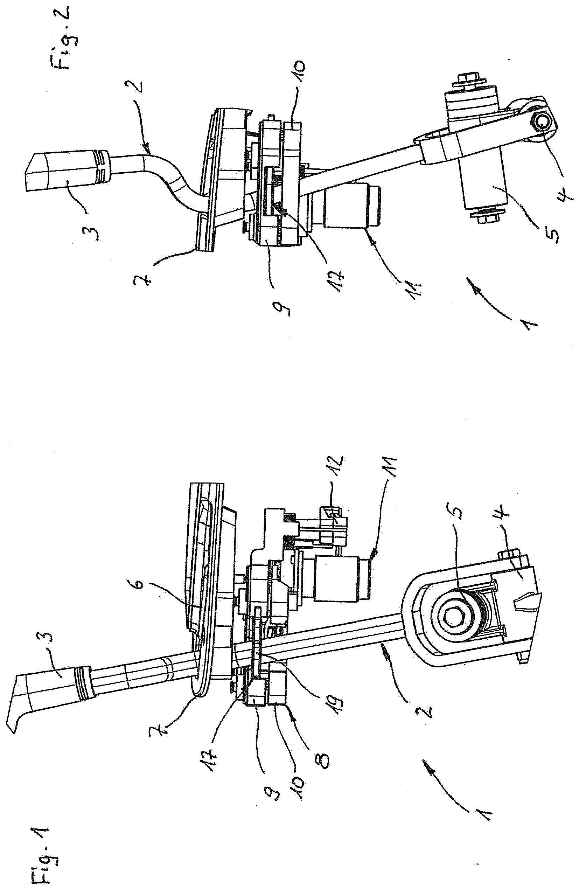

In den Figuren 1 und 2 ist eine Parksperrbetätigungseinrichtung 1 in zwei um 90° verdrehten Seitenansichten dargestellt. Sie hat einen nach oben gerichteten Betätigungshebel 2, der am oberen Ende in einem Handgriff 3 endet. Am unteren Ende ist der Betätigungshebel 2 gabelförmig ausgebildet und in einem Gelenklager 4 derart gelagert, dass er in allen Richtungen frei beweglich ist. Über eine dort vorgesehene Verbindungsmuffe 5 kann der Betätigungshebel 2 mit beispielsweise einem Drahtzug oder einem Gestänge (hier nicht dargestellt) verbunden werden, dessen anderes Ende mit einem Parksperrmechanismus gekoppelt ist, der an dem Getriebe eines Kraftfahrzeuges angebracht ist.

Den Betätigungshebel 2 durchsetzt eine schlitzförmige Kulisse 6, die einer Kulissenplatte 7 eingeformt ist und den Betätigungshebel 2 formschlüssig einfasst, so dass dem Betätigungshebel 2 bei seiner Betätigung ein durch den Verlauf der Kulisse 6 bestimmter Weg vorgegeben ist. Die Kulissenplatte 7 ist dazu bestimmt, in eine Wandung des Kraftfahrzeuges bündig so eingebaut zu werden, dass nur der Betätigungshebel 2 der Parksperrbetätigungseinrichtung 1 in den Innenraum des Kraftfahrzeuges hineinragt und dass er von dessen Fahrer bedient werden kann.

An der Unterseite der Kulissenplatte 7 ist eine Sperrklinkeneinrichtung 8 angeordnet. Sie hat eine kulissennahe Tragplatte 9 aus Kunststoff und darunter eine kulissenferne Tragplatte 10 aus Metall. Beide Tragplatten 9, 10 sind über mehrere, sie durchsetzende Schrauben an der Unterseite der Kulissenplatte 7 befestigt. Über Distanzstücke sind sie zueinander beabstandet. An der Unterseite der kulissenfernen Tragplatte 10 ist ein Aktuator 11 befestigt, der als elektrisch aktivierbarer Hubmagnet ausgebildet ist. Über einen an der kulissennahen Tragplatte 9 angebrachten Stecker 12 kann er mit Strom beaufschlagt werden. Der Stecker 12 stellt eine Schnittstelle zu einer Steuereinrichtung dar, die den Aktuator 11 in Abhängigkeit zu Betriebsdaten des Kraftfahrzeuges bestromt oder die Bestromung unterbricht.

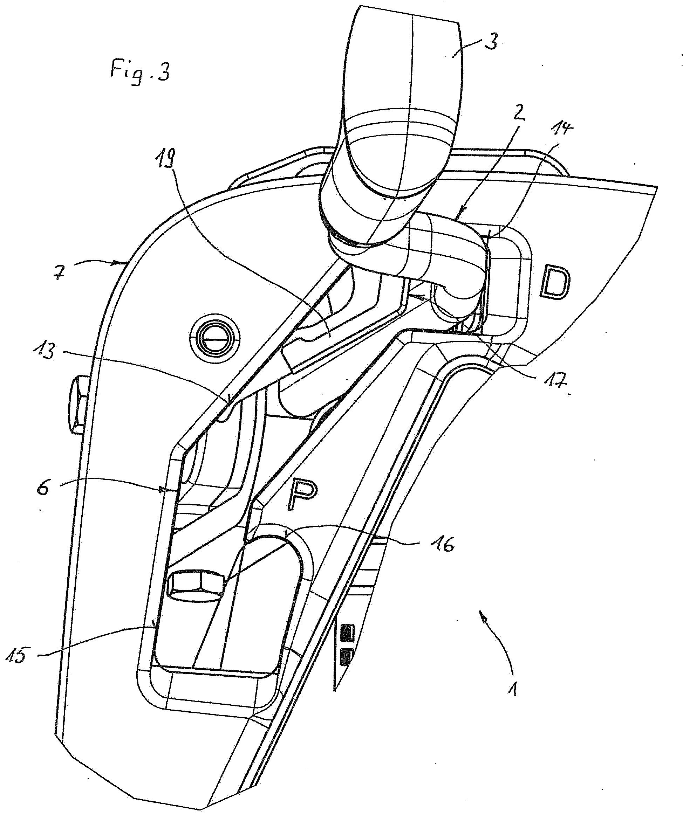

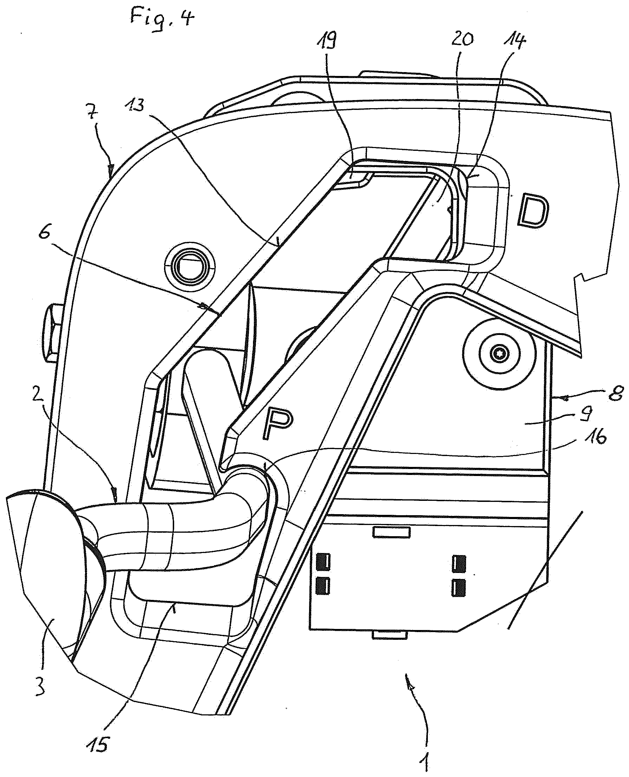

In den Figuren 3 und 4 ist der wesentliche Teil der Kulissenplatte 7 von oben, d.h. aus der Fahrersicht zu sehen. Die Kulisse 6 hat einen graden Verschiebebereich 13, der gemäß den Darstellungen im oberen Bereich nach rechts abknickt und dort in einer Fahrstellungsbucht 14 endet, die die Fahrstellung des Betätigungshebels 2 definiert. In den Darstellungen nach unten knickt der Verschiebebereich 13 zunächst ab und weitet sich dann zu einem Parkstellungsbereich 15 mit einer Parkstellungsbucht 16, die die Parkstellung des Betätigungshebels 2 definiert.

In Figur 3 befindet sich der Betätigungshebel 2 der Fahrstellungsbucht 14, während in Figur 4 der Betätigungshebel 2 in der Parkstellungsbucht 16 die Parkstellung einnimmt. Durch hier nicht dargestellte Federn kann dafür gesorgt werden, dass der Betätigungshebel 2 in den Darstellungen nach rechts gezogen wird, so dass er sich einerseits in der Fahrstellung in Anlage an die Fahrstellungsbucht 14 der Kulisse 6 befindet und in der Parkstellung in die Parkstellungsbucht 16 hineingezogen wird.

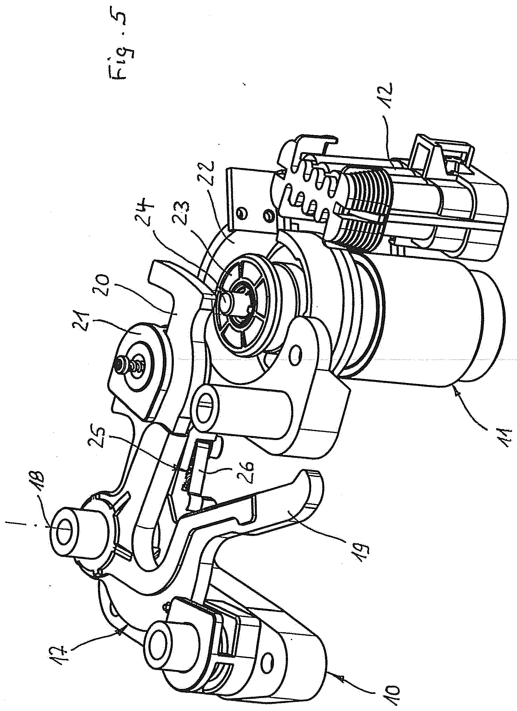

Figur 5 stellt wesentliche Teile der Sperrklinkeneinrichtung 8 dar. Weggelassen ist nur die kulissennahe Tragplatte 9 und damit auch die Befestigung des Steckers 12. Die kulissenferne Tragplatte 10 ist ein Formteil, das sich unterhalb der Kulissenplatte 7 und parallel zu dieser derart erstreckt, dass die Teile des Formteils nicht in die Kulisse 6 hineinragen. An der kulissenfernen Tragplatte 10 ist obenseitig - und damit zwischen der kulissenfernen Tragplatte 10 und der kulissennahen Tragplatte 9 angeordnet (siehe auch Figuren 1 und 2) - ein Sperrklinkenformteil 17 um eine vertikale Achse 18 in einer zur Ebene der Kulissenplatte 7 parallelen Eben verschwenkbar gelagert. Das Sperrklinkenformteil 17 ist in seiner Grundform V-förmig, wobei der eine V-Schenkel eine Sperrklinke 19 und der andere V-Schenkel ein Betätigungselement 20 bilden. Das Sperrklinkenformteil 17 ist aus Stahlblech hergestellt, das mit einer Kunststoffumspritzung versehen ist, um gute Gleitbedingungen bereitzustellen und Geräusche zu vermeiden. In der in Figur 5 gezeigten Stellung befindet sich das Sperrklinkenformteil 17 in einer Sperrstellung, in der das Betätigungselement 20 außenseitig an einem Anschlag 21 anliegt. Der kann aus einem Elastomerwerkstoff ausgebildet sein, um Anschlaggeräusche zu dämpfen.

Der Aktuator 11 ist an der kulissenfernen Tragplatte 10 innerhalb eines Befestigungsrings 22 gehalten. Obenseitig weist der Aktuator 11 einen Blockierring 23 auf, der über einen Stift 24 mit einem Anker innerhalb des Aktuators 11 verbunden ist, der von einem Elektromagneten umgeben ist. Durch Bestromung des Aktuators 11 kann der Blockierring 23 aus einer unteren, den Nichtblockiermodus definierenden Stellung in die gezeigte obere, den Blockiermodus definierenden Stellung angehoben werden. In dieser hier gezeigten Stellung blockiert der Blockierring 23 das freie Ende des Betätigungselements 20, so dass das Sperrklinkenformteil 17 nicht bewegt werden kann. Das Betätigungselement 20 ist einerseits durch den Blockierring 23 und andererseits durch den Anschlag 21 eingefangen.

Aus dem gezeigten Blockiermodus kann der Aktuator 11 durch Unterbrechung der Bestromung in den Nichtblockiermodus versetzt werden, wobei eine in dem Aktuator 11 vorhandene Rückstellfeder den Blockierring 23 nach unten und damit außerhalb des Bewegungsbereichs des Betätigungselements 20 zieht. In dem Nichtblockiermodus kann das Sperrklinkenformteil 17 aus der gezeigten Stellung im Uhrzeigersinn verschwenkt werden. Unterhalb des Sperrklinkenformteils 17 ist ein Mikroschalter 25 angeordnet, dessen Schalterhebel 26 nach innen vorsteht.

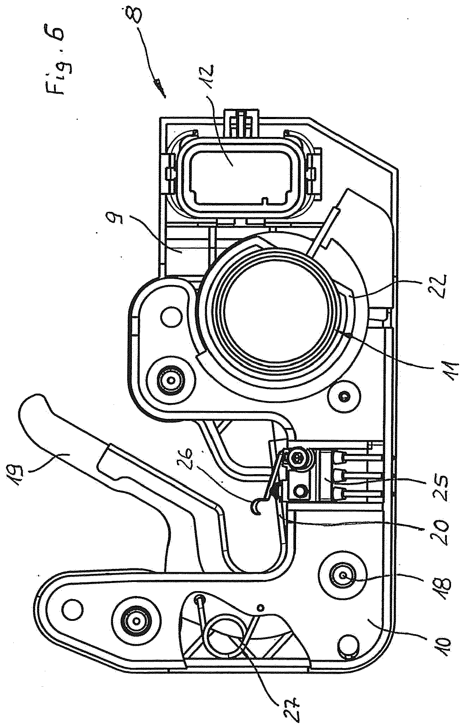

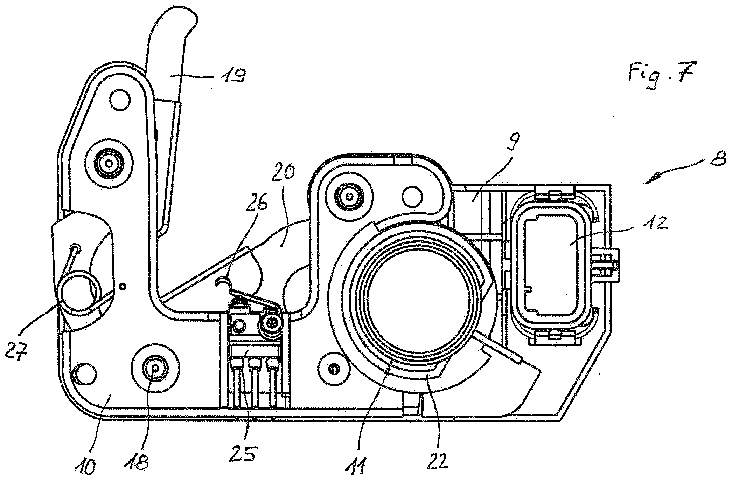

Die Darstellung gemäß den Figuren 6 und 7 zeigen die vollständige Sperrklinkeneinrichtung 8 von der Unterseite her. In Figur 6 befinden sich das Sperrklinkenformteil 17 und damit die Sperrklinke 19 in der sich auch aus Figur 5 ergebenden Sperrstellung. In dieser Stellung ist das Betätigungselement 20 durch die kulissenferne Tragplatte 10 verdeckt. In Figur 7 ist das Sperrklinkenformteil 17 entgegen dem Uhrzeigersinn etwa um 45° verschwenkt, so dass jetzt auch ein Teil des Betätigungselements 20 sichtbar ist.

Im Bereich der Verbindung von Sperrklinke 19 und Betätigungselement 20 ist eine Spiralfeder 27 angeordnet. Sie ist durch Wegschneiden eines Teils der kulissenfernen Tragplatte 10 sichtbar gemacht. Die Spiralfeder 27 hat einen Arm, der mit dem Sperrklinkenformteil 17 verbunden ist, und einen weiteren Arm, der an der kulissenfernen Tragplatte 10 angebracht ist. Die Anordnung ist so getroffen, dass die Spiralfeder 27 am meisten gespannt ist, also die höchste Federkraft entwickelt, wenn sich das Sperrklinkenformteil 17 in einer Stellung zwischen der Sperr- und der Freigabestellung befindet, d.h. die Spiralfeder 27 wirkt als Übertotpunktfeder, bei der die Spiralfeder 27 zwischen den beiden Stellungen einen instabilen Kipppunkt durchläuft. Dies hat zur Folge, dass das Sperrklinkenformteil 17 aus der Sperrstellung wie auch aus der Freigabestellung nur durch Überwindung einer zunächst größer werdenden Federkraft in die jeweils andere Stellung bewegt werden kann.

Das Zusammenwirken von Kulisse 6 und Sperrklinkenformteil 17 ergibt sich aus den Figuren 3 und 4. In Figur 3 befindet sich der Betätigungshebel 2 in der mit "D" gekennzeichneten Fahrstellung. In dieser Stellung gibt der hier nicht dargestellte Parksperrmechanismus, der mit dem Betätigungshebel 2 gekoppelt ist, das Getriebe frei, d.h. das Kraftfahrzeug kann bewegt werden. Wie aus Figur 3 deutlich zu ersehen ist, ragt die Sperrklinke 19 in den Bereich der Kulisse 6 und damit des Bewegungsbereichs des Betätigungshebels 2 derart weit hinein, dass der Betätigungshebel 2 in der Fahrstellung blockiert ist. Die Sperrklinke 19 befindet sich also in der Sperrstellung. In dieser Stellung ist das Sperrklinkenformteil 17 und damit die Sperrklinke 19 durch den Aktuator 11 blockiert, wenn er bestromt ist und damit dessen Blockierring 23 in den Bewegungsbereich des Sperrklinkenformteils 17 hinein angehoben worden ist (Blockiermodus). Die Bestromung des Aktuators 11 bleibt während der gesamten Fahrt erhalten, solange die Geschwindigkeit des Kraftfahrzeuges nicht unter einen bestimmten Schwellwert fällt oder das Fahrzeug zum Stillstand gekommen ist. Hierzu erhält die nicht dargestellte Steuereinrichtung entsprechende Daten über die jeweilige Geschwindigkeit des Kraftfahrzeuges, z.B. über den Tachometer.

Wird das Kraftfahrzeug angehalten, erhält die Steuereinrichtung entsprechende Geschwindigkeitsdaten (Signale), aufgrund dessen die Steuereinrichtung die Bestromung des Aktuators 11 unterbricht. Die Rückstellfeder des Aktuators 11 wird dann wirksam mit der Folge, dass der Blockierring 23 aus dem Bewegungsbereich des Betätigungselements 20 herausfährt und das Sperrklinkenformteil 17 hierdurch freigegeben wird (Nichtblockiermodus). Der Betätigungshebel 2 kann nun aus der in Figur 3 dargestellten Fahrstellung und damit aus der Fahrstellungsbucht 14 herausbewegt werden, wobei die Sperrklinke 19 in den Bereich unterhalb der Kulissenplatte 7 verdrängt und damit verschwenkt wird. Der Betätigungshebel 2 kann dann entlang des Verschiebebereichs 13 in Richtung auf den Parkstellungsbereich 15 verschoben werden, bis er in der Parkstellungsbucht 16 die in Figur 4 dargestellte, mit "P" gekennzeichnete Parkstellung einnimmt. Durch diese Bewegung des Betätigungshebels 2 wird der Parksperrmechanismus am Getriebe in dessen Blockierstellung versetzt und verhindert dadurch eine selbständige Bewegung des Fahrzeuges, wenn es so zum Parken abgestellt wird.

Sollte es in dieser Position zu einer elektrischen Fehlfunktion des Aktuators 11 kommen, die zu dessen Strombeaufschlagung führt, fährt der Blockierring 23 mit dem Stift 24 von unten gegen das Sperrklinkenformteil 17. Das verhindert eine Verriegelung des Sperrklinken-Mechanismus. Desweiteren besteht eine Option, einen zweiten Mikroschalter zu integrieren, der beide Stellungen des Blockierrings 23 des Aktuators 11 abfragt, um auch dieses Signal an die Steuereinheit zu geben.

Soll das Kraftfahrzeug wieder bewegt werden, wird der Betätigungshebel 2 zwecks Lösen des Parksperrmechanismusses aus der in Figur 4 gezeigten Parkstellung zunächst ein wenig in Richtung des Parkstellungsbereichs 15 und dann entlang des Verschiebebereichs 13 in Richtung auf die Fahrstellungsbucht 14 bewegt. Aus Figur 4 ist ersichtlich, dass durch die vorbeschriebene Verschwenkung des Sperrklinkenformteils 17 dessen Betätigungselement 20 in die Fahrstellungsbucht 14 schräg hineinragt. Beim Hineinbewegen des Betätigungshebels 2 in die Fahrstellungsbucht 14 wird das Betätigungselement 20 entgegen dem Uhrzeigersinn aus der Fahrstellungsbucht 14 verdrängt, wodurch das Sperrklinkenformteil 17 derart verschwenkt, dass die Sperrklinke 19 wieder in den Bereich der Kulisse 6 hineingeschwenkt wird und bei Einnahme der Fahrstellung des Betätigungshebels 2 wieder die Sperrstellung gemäß Figur 3 erreicht.

Gleichzeitig wird der Schalterhebel 26 des Mikroschalters 25 durch den Betätigungshebel 2 beaufschlagt, da er ebenfalls in die Fahrstellungsbucht 14 hineinragt. Hierdurch wird die elektrische Verbindung zwischen Steuereinrichtung und Aktuator 11 geschlossen. Wird nun das Kraftfahrzeug in Fahrt gesetzt, erhält die Steuereinrichtung ein Signal, das sie veranlasst, den Aktuator 11 zu bestromen und damit in den Blockiermodus zu bringen, in der das Sperrklinkenformteil 17 in dessen Sperrstellung blockiert ist. In diesem Modus kann der Betätigungshebel 2 nicht aus der in Figur 3 dargestellten Fahrstellung in die in Figur 4 gezeigte Parkstellung bewegt werden. Eine Umstellung in den Nichtblockiermodus erfolgt - wie oben beschrieben - erst dann, wenn das Kraftfahrzeug wieder angehalten ist und demgemäß die Bestromung unterbrochen wird.

## Patentansprüche

1. Parksperrbetätigungseinrichtung (1) ausschließlich für die Betätigung eines Parksperrmechanismusses eines Kraftfahrzeuges, mit einem von Hand bedienbaren Betätigungshebel (2), der in einer Kulisse (6) zwischen einer Fahrstellung und einer Parkstellung beweglich geführt ist, **dadurch gekennzeichnet, dass** eine Sperrklinke (19) vorgesehen ist, die zwischen einer Freigabestellung, in der sie die Beweglichkeit des Betätigungshebels (2) nicht behindert, und einer Sperrstellung bewegbar ist, in der sie in den Bewegungsbereich des Betätigungshebels (2) zwischen dessen Fahr- und Parkstellung sperrend hineinragt, und dass ein mit elektrischem Strom beaufschlagbarer Aktuator (11) mit einem beweglichen Blockierelement (23) vorgesehen ist, der in einen Blockiermodus bringbar ist, in dem das Blockierelement (23) die Sperrklinke (19) blockiert, wenn sich die Sperrklinke (19) in ihrer Sperrstellung befindet, und der in einen Nichtblockiermodus bringbar ist, in der die Sperrklinke (19) vom Aktuator (11) freigegeben ist.

2. Parksperrbetätigungseinrichtung nach Anspruch 1, **dadurch gekennzeichnet, dass** der Aktuator (11) eine Rückstellfeder aufweist, die das Blockierelement (23) in einer Bewegungsrichtung beaufschlagt und gegen deren Federwirkung das Blockierelement (23) von einem Modus des Aktuators (11) in dessen anderen Modus bewegt wird, wenn der Aktuator (11) bestromt ist, insbesondere dass die Rückstellfeder das Blockierelement (23) bei Unterbrechung der Bestromung des Aktuators (11) aus dem Blockiermodus in den Nichtblockiermodus versetzt.

3. Parksperrbetätigungseinrichtung nach Anspruch 1 oder 2, **dadurch gekennzeichnet, dass** die Sperrklinke (19) derart geformt ist, dass der Betätigungshebel (2) von Hand aus der Fahrstellung in die Parkstellung unter Verdrängen der Sperrklinke (19) in die Freigabestellung bewegbar ist, wenn sich der Aktuator im Nichtblockiermodus befindet.

4. Parksperrbetätigungseinrichtung nach einem der Ansprüche 1 bis 3, **dadurch gekennzeichnet, dass** die Sperrklinke (19) mit einem Betätigungselement (20) derart verbunden ist, dass es in den Bereich der Fahrstellung des Betätigungshebels (2) hineinragt, wenn sich die Sperrklinke (19) in der Freigabestellung und der Betätigungshebel (2) außerhalb der Fahrstellung befinden, und dass das Betätigungselement (20) aus dem Bereich der Fahrstellung verdrängt wird und hierdurch die Sperrklinke (19) aus der Freigabestellung in die Sperrstellung bewegt wird, wenn der Betätigungshebel (2) in die Fahrstellung bewegt wird.

5. Parksperrbetätigungseinrichtung nach Anspruch 4, **dadurch gekennzeichnet, dass** Sperrklinke (19) und Betätigungselement (20) im Wesentlichen als V-förmiges Formteil (17) ausgebildet sind, bei dem der eine V-Schenkel die Sperrklinke (19) und der andere V-Schenkel das Betätigungselement (20) bilden.

6. Parksperrbetätigungseinrichtung nach Anspruch 4 oder 5, **dadurch gekennzeichnet, dass** der Aktuator (11) mit dem Betätigungselement (20) zusammenwirkt.

7. Parksperrbetätigungseinrichtung nach einem der Ansprüche 1 bis 6, **dadurch gekennzeichnet, dass** ein Detektor, insbesondere ein Sensor oder ein Schalter (25), zur Erfassung der Fahrstellung des Betätigungshebels (2) vorhanden ist, über den die Bestromung des Aktuators derart gesteuert wird, dass er bei Erfassung der Fahrstellung des Betätigungshebels (2) in den Blockiermodus versetzt wird, insbesondere durch Bestromung des Aktuators (11).

8. Parksperrbetätigungseinrichtung nach einem der Ansprüche 1 bis 7, **dadurch gekennzeichnet, dass** der Aktuator (11) mit einer Steuereinrichtung verbindbar oder verbunden ist, die einen Eingang für die Zuführung von Betriebsdaten aufweist, die bestimmte Betriebszustände des Kraftfahrzeuges repräsentieren, und die dazu geeignet ist, die Bestromung des Aktuators (11) in Abhängigkeit von diesen Daten zu schalten.

9. Parksperrbetätigungseinrichtung nach einem der Ansprüche 1 bis 8, **dadurch gekennzeichnet, dass** in der Bestromung des Aktuators (11) ein von Hand betätigbarer Schalter vorgesehen ist, mittels dem der Aktuator (11) aus dem Blockiermodus in den Nichtblockiermodus versetzbar ist und umgekehrt.

10. Parksperrbetätigungseinrichtung nach einem der Ansprüche 1 bis 9, **dadurch gekennzeichnet, dass** die Sperrklinke (19) in ihrer Freigabestellung und in ihrer Sperrstellung jeweils in Richtung auf diese Stellungen federbeaufschlagt ist, insbesondere mittels einer Übertotpunktfederanordnung (27).

11. Parksperrbetätigungseinrichtung nach einem der Ansprüche 1 bis 10, **dadurch gekennzeichnet, dass** die Sperrklinke (19) um eine Achse (18) verschwenkbar ist, die sich senkrecht zur Ebene erstreckt, in der die Kulisse (6) verläuft, insbesondere dass die Sperrklinke (19) an der Unterseite der Kulisse (6) gelagert ist.

12. Parksperrbetätigungseinrichtung nach einem der Ansprüche 1 bis 11, **dadurch gekennzeichnet, dass** die Kulisse (6) im Bereich der Fahrstellung eine Richtungsänderung in ihrer Ebene ausbildet.

13. Parksperrbetätigungseinrichtung nach einem der Ansprüche 1 bis 12, **dadurch gekennzeichnet, dass** eine elektrische und/oder akustische Signaleinrichtung insbesondere im Bereich der Kulisse (6) vorgesehen ist, die den Wechsel des Aktuators (11) von einem in den anderen Modus, oder einen Modus des Aktuators (11) dauerhaft oder beide Moden des Aktuators (11) dauerhaft, aber unterschiedlich signalisiert.

14. Parksperre mit einer Parksperrbetätigungseinrichtung, die einen von Hand bedienbaren Betätigungshebel aufweist, der über eine Koppelung mit einem Parksperrmechanismus verbunden ist, **dadurch gekennzeichnet, dass** die Parksperrbetätigungseinrichtung (1) nach einem der Ansprüche 1 bis 13 ausgebildet ist.

15. Kraftfahrzeug mit einer Parksperre zum Blockieren der Bewegung des Kraftfahrzeuges beim Parken, **dadurch gekennzeichnet, dass** das Kraftfahrzeug mit einer Parksperre nach Anspruch 14 versehen ist und dass mit dem Aktuator (11) eine Steuereinrichtung verbunden ist, die einen Eingang für die Zuführung von Betriebsdaten aufweist, die bestimmte Betriebszustände des Kraftfahrzeuges repräsentieren, und die dazu geeignet ist, die Bestromung des Aktuators (11) in Abhängigkeit von diesen Signalen zu schalten, und dass das Kraftfahrzeug zumindest eine mit der Steuereinrichtung verbundene Erfassungseinrichtung zur Ermittlung der Betriebsdaten, insbesondere der Geschwindigkeit des Kraftfahrzeuges und/oder dessen Getriebeschaltstellung, aufweist, wobei Erfassungs- und Steuereinrichtung derart zusammenwirken, dass der Aktuator (11) aus dem Blockiermodus in den Nichtblockiermodus versetzt wird, sobald die Geschwindigkeit des Kraftfahrzeuges einen bestimmten Grenzwert unterschreitet oder gleich Null ist und/oder wenn eine bestimmte Getriebeschaltstellung eingelegt ist, und dass der Aktuator (11) aus dem Nichtblockiermodus in den Blockiermodus versetzt wird, sobald der Betätigungshebel (2) in Fahrstellung bewegen worden ist und die Geschwindigkeit des Kraftfahrzeuges einen bestimmten Grenzwert überschreitet oder größer als Null ist und/oder wenn in eine bestimmte Getriebeschaltstellung gewechselt wird.

## Claims

1. A parking block actuation device (1) exclusively for the actuation of a parking block mechanism of a motor vehicle, that has a manually operated actuation lever (2) that is guided moveably within a connecting link (6) between a driving position and a parking position, **characterised in that** a ratchet (19) is provided that can be moved between a release position, in which it does not prevent the moveability of the actuation lever (2), and a blocking position in which it projects, blocking, into the range of movement of the actuation lever (2) between its driving and parking position, and **in that** an actuator (11) to which electric current can be applied is provided with a moveable blocking element (23) that can be brought into a blocking mode in which the blocking element (23) blocks the ratchet (19) when the ratchet (19) is in its blocking position, and which can be brought into a non-blocking mode in which the ratchet (19) is released by the actuator (11).

2. The parking block actuation device according to Claim 1, **characterised in that** the actuator (11) has a return spring that acts on the blocking element (23) in a direction of movement, and against its spring effect the blocking element (23) is moved from one mode of the actuator (11) into its other mode when the actuator (11) is energised, in particular **in that** the return spring shifts the blocking element (23) from the blocking mode into the non-blocking mode when the energisation of the actuator (11) is interrupted.

3. The parking block actuation device according to Claim 1 or 2, **characterised in that** the ratchet (19) is formed such that the actuation lever (2) can be moved manually from the driving position into the parking position by displacing the ratchet (19) into the release position when the actuator is in the non-blocking mode.

4. The parking block actuation device according to any of Claims 1 to 3, **characterised in that** the ratchet (19) is connected to an actuation element (20) such that it projects into the region of the driving position of the actuation lever (2) when the ratchet (10) is in the release position and the actuation lever (2) is outside of the driving position, and **in that** the actuation element (20) is displaced from the region of the driving position, and in this way the ratchet (19) is moved out of the release position into the blocking position when the actuation lever (20) is moved into the driving position.

5. The parking block actuation device according to Claim 4, **characterised in that** the ratchet (19) and the actuation element (20) are substantially made as a V-shaped moulded part (17) wherein the one V-arm forms the ratchet (19) and the other V-arm forms the actuation element (20).

6. The parking block actuation device according to Claim 4 or 5, **characterised in that** the actuator (11) cooperates with the actuation element (20).

7. The parking block actuation device according to any of Claims 1 to 6, **characterised in that** a detector, in particular a sensor or a switch (25), is provided to detect the driving position of the actuation lever (2) by means of which the energisation of the actuator is controlled such that upon detecting the driving position of the actuation lever (2) it is shifted into the blocking mode, in particular by energising the actuator (11).

8. The parking block actuation device according to any of Claims 1 to 7, **characterised in that** the actuator (11) can be or is connected to a control device that has an input for the delivery of operating data that represent certain operating states of the motor vehicle and that is suitable for switching the energisation (11) of the actuator dependently upon these data.

9. The parking block actuation device according to any of Claims 1 to 8, **characterised in that** in the energisation of the actuator (11) a hand operated switch is provided by means of which the actuator (11) can be shifted from the blocking mode into the non-blocking mode and vice versa.

10. The parking block actuation device according to any of Claims 1 to 9, **characterised in that** in its release position and in its blocking position the ratchet (19) is respectively spring-loaded in the direction of these positions, in particular by means of an over dead centre spring arrangement (27).

11. The parking block actuation device according to any of Claims 1 to 10, **characterised in that** the ratchet (19) can be swivelled about an axis (18) that extends perpendicular to the plane in which the connecting link (6) runs, in particular **in that** the ratchet (19) is stored on the lower side of the connecting link (6).

12. The parking block actuation device according to any of Claims 1 to 11, **characterised in that** the connecting link (6) forms a change of direction in its plane in the region of the driving position.

13. The parking block actuation device according to any of Claims 1 to 12, **characterised in that** an electric and/or acoustic signal device is provided, in particular in the region of the connecting link (6), which device signals the change of the actuator (11) from one into the other mode, or permanently signals a mode of the actuator (11) or permanently signals both modes of the actuator (11), but differently.

14. A parking block with a parking block actuation device that has a hand-operated actuation lever that is connected to a parking block mechanism by a coupling, **characterised in that** the parking block actuation device (1) is designed according to any of Claim 1 to 13.

15. A motor vehicle that has a parking block for blocking the movement of the motor vehicle when parking, **characterised in that** the motor vehicle is provided with a parking block according to Claim 14 and **in that** connected to the actuator (11) there is a control device that has an input for the delivery of operating data that represent certain operating states of the motor vehicle and which is suitable for switching the energisation of the actuator (11) dependently upon these signals, and **in that** the motor vehicle has at least one detection device connected to the control device for determining the operating data, in particular the speed of the motor vehicle and/or its gear shift position, the detection and control device cooperating such that the actuator (11) is shifted from the blocking mode into the non-blocking mode as soon as the speed of the motor vehicle exceeds a specific limit value or is equal to zero and/or if a specific gear shift position is engaged, and **in that** the actuator (11) is shifted from the non-blocking mode into the blocking mode as soon as the actuation lever (2) has been moved into the driving position and the speed of the motor vehicle exceeds a specific limit value or is greater than zero and/or if a specific gear shift position is changed.

## Revendications

1. Dispositif d'activation du frein de stationnement (1) exclusivement destiné à l'activation d'un mécanisme de frein de stationnement d'un véhicule motorisé, avec un levier d'actionnement (2) utilisable manuellement, qui est guidé de manière à se déplacer dans une coulisse (6) entre une position de marche avant et une position de stationnement, **caractérisé en ce qu'un** cliquet (19) est prévu, lequel peut se déplacer entre une position de dégagement, dans laquelle ledit cliquet n'entrave pas la mobilité du levier d'actionnement (2) et une position de blocage dans laquelle ledit cliquet se dresse et bloque dans la zone de mouvement du levier d'actionnement (2) entre sa position de marche et sa position de stationnement, et **en ce qu'**un actionneur (11) qui peut être alimenté avec un courant électrique est pourvu d'un élément de blocage (23) mobile, qui peut être mis dans un mode de blocage, dans lequel l'élément de blocage (23) bloque le cliquet (19), quand le cliquet (19) se trouve dans sa position de blocage et qui peut être en contact dans un mode de non-blocage, dans lequel le cliquet (19) est libéré par l'actionneur (11).

2. Dispositif d'activation du frein de stationnement selon la revendication 1, **caractérisé en ce que** l'actionneur (11) présente un ressort de rappel qui alimente l'élément de blocage (23) dans une direction de déplacement et l'élément de blocage (23) est déplacé contre l'effet de son ressort d'un mode de l'actionneur (11) vers son autre mode, si l'actionneur (11) est alimenté en courant, notamment **en ce que** le ressort de rappel décale l'élément de blocage (23) du mode de blocage vers le mode de non-blocage en interrompant l'alimentation de l'actionneur (11).

3. Dispositif d'activation du frein de stationnement selon la revendication 1 ou 2, **caractérisé en ce que** le cliquet (19) est formé de sorte que le levier d'actionnement (2) peut se déplacer manuellement de la position de marche à la position de stationnement par remplacement du cliquet (19) dans la position de dégagement si l'actionneur se trouve en mode de non-blocage.

4. Dispositif d'activation du frein de stationnement selon l'une quelconque des revendications 1 à 3, **caractérisé en ce que** le cliquet (19) est relié avec un élément d'activation (20) de sorte à ce que l'élément se dresse dans la zone de la position marche du levier d'actionnement (2) si le cliquet (19) se trouve dans la position de dégagement et le levier d'actionnement (2) en dehors de la position de marche et **en ce que** l'élément d'activation (20) est évincé de la zone de la position de marche et par conséquent que le cliquet (19) est déplacé de la position de dégagement vers la position de blocage, si le levier d'actionnement (2) est déplacé en position de marche.

5. Dispositif d'activation du frein de stationnement selon la revendication 4, **caractérisé en ce que** le cliquet (19) et l'élément d'activation (20) sont conçus essentiellement comme une pièce moulée (17) en forme de V, dans laquelle l'une des branches forme le cliquet (19) et l'autre branche l'élément d'activation (20).

6. Dispositif d'activation du frein de stationnement selon la revendication 4 ou 5, **caractérisé en ce que** l'actionneur (11) interagit avec l'élément d'activation (20).

7. Dispositif d'activation du frein de stationnement selon l'une quelconque des revendications 1 à 6, **caractérisé en ce qu'**un détecteur, notamment un capteur ou un commutateur (25), existe pour enregistrer la position de marche du levier d'actionnement (2) via lequel l'alimentation en courant de l'actionneur est commandée de sorte qu'il se décale, lors de l'enregistrement de la position marche du levier d'actionnement (2), en mode de blocage notamment sous l'effet de l'alimentation en courant de l'actionneur (11).

8. Dispositif d'activation du frein de stationnement selon l'une quelconque des revendications 1 à 7, **caractérisé en ce que** l'actionneur (11) est lié ou peut être relié à un dispositif de commande qui présente une entrée pour transmettre des données de fonctionnement représentant des certains états de fonctionnement et qui convient pour commuter l'alimentation en courant de l'actionneur (11) en fonction de ces données.

9. Dispositif d'activation du frein de stationnement selon l'une quelconque des revendications 1 à 8, **caractérisé en ce qu'**un interrupteur actionnable à la main est prévu dans l'alimentation de l'actionneur (11) au moyen duquel l'actionneur (11) peut être décalé du mode de blocage vers le mode de non-blocage et inversement.

10. Dispositif d'activation du frein de stationnement selon l'une quelconque des revendications 1 à 9, **caractérisé en ce que** le cliquet (19) est soumis à l'action d'un ressort dans sa position de dégagement et dans sa position de blocage à chaque fois dans le sens de ces positions, et ce notamment au moyen d'un agencement au-delà de ressort de point mort (27).

11. Dispositif d'activation du frein de stationnement selon l'une quelconque des revendications 1 à 10, **caractérisé en ce que** le cliquet (19) peut pivoter autour d'un axe (18), qui s'étend perpendiculairement au plan, dans lequel la coulisse (6) court, notamment **en ce que** le cliquet (19) est monté au niveau du plan inférieur de la coulisse (6).

12. Dispositif d'activation du frein de stationnement selon l'une quelconque des revendications 1 à 11, **caractérisé en ce que** la coulisse (6) forme un changement de direction dans son plan dans la zone de la position marche.

13. Dispositif d'activation du frein de stationnement selon l'une quelconque des revendications 1 à 12, **caractérisé en ce qu'un** dispositif de signaux électriques et/ou acoustiques notamment dans la zone de la coulisse (6) est prévu, lequel dispositif signale la commutation d'actionneur (11) d'un mode vers l'autre ou signale un mode de l'actionneur (11) ou deux modes de l'actionneur (11) permanentes, mais de façon différente.

14. Frein de stationnement avec un dispositif d'activation du frein de stationnement qui présente un levier d'actionnement (2) utilisable manuellement, qui est lié par accouplement avec un mécanisme du frein de stationnement, **caractérisé en ce que** le dispositif d'activation du frein de stationnement (1) est formé selon l'une quelconque des revendications 1 à 13.

15. Véhicule motorisé pourvu d'un frein de stationnement pour bloquer le mouvement dudit véhicule lors du stationnement **caractérisé en ce que** le véhicule motorisé est pourvu d'un frein de stationnement selon la revendication 14 et **en ce qu'**un dispositif de commande est relié à l'actionneur (11), lequel dispositif présente une entrée pour transmettre des données de fonctionnement qui représentent les certains états de fonctionnement du véhicule motorisé et qui convient pour commuter l'alimentation en courant de l'actionneur (11) en fonction de ces signaux, et **en ce que** le véhicule motorisé présente au moins un dispositif d'enregistrement relié au dispositif de commande afin de déterminer les données de fonctionnement, notamment la vitesse du véhicule motorisé et/ou une position du pignon de transmission, le dispositif d'enregistrement et de commande interagissant de sorte que l'actionneur (11) se décale du mode de blocage vers le mode de non-blocage, dès que la vitesse du véhicule motorisé passe en dessous d'une certain valeur seuil ou est équivalente à zéro et/ou si une position de sélection des vitesses déterminée est demandée, et **en ce que** l'actionneur (11) se décale du mode de non-blocage vers le mode de blocage dès que le levier d'actionnement (2) est déplacé en position marche et la vitesse du véhicule motorisé dépasse une valeur seuil déterminée ou est supérieure à zéro et/ou si on bascule vers une position de sélection des vitesses déterminée.
